# EUROPEAN PATENT APPLICATION

(11) **EP 4 583 360 A1**
(43) Date of publication of application: **09.07.2025**
(21) Application number: 24221932.7
(22) Date of filing: 19.12.2024
(51) Int. Cl.: H02J 7/00

(54) **SECONDARY BATTERY PROTECTION CIRCUIT, SECONDARY BATTERY PROTECTION DEVICE AND BATTERY DEVICE ABOUT TRANSITION TO LOW POWER MODE**

(30) Priority: 27.12.2023 JP 2023221712
(71) Applicant: MITSUMI ELECTRIC CO., LTD., Tama-Shi, Tokyo 206-8567 (JP)
(72) Inventor: KAWAGUCHI, Norihito, Tama-shi, Tokyo 206-8567 (JP)
(74) Representative: Regimbeau

(57) **Abstract**

A secondary battery protection integrated circuit includes a control circuit configured to set the secondary battery protection integrated circuit to a first state in which a resistor is disconnected from a power supply terminal or a monitor terminal; set the secondary battery protection integrated circuit to a second state in which the monitor terminal is coupled to the power supply terminal through the resistor; and set the secondary battery protection integrated circuit to a third state in which (i) the monitor terminal is coupled to the power supply terminal through the resistor that is set to have a second resistance value and (ii) power consumption of the secondary battery protection integrated circuit is less than that in the first state, when a potential at the monitor terminal becomes higher than a threshold less than a potential at the power supply terminal in the second state.

## Description

### BACKGROUND

### 1. Technical Field

The present disclosure relates to a secondary battery protection integrated circuit, a secondary battery protection integrated device, and a battery device.

### 2. Description of the Related Art

A secondary battery protection integrated circuit has been known in which when over-discharging is detected in a state in which a charger is not connected, a current detection terminal is pulled up to a power supply terminal almost simultaneously with over-discharge detection, and as a result, the secondary battery protection integrated circuit transitions from over-discharge protection mode to standby mode. By transitioning from the over-discharge protection mode to the standby mode, an over-discharged secondary battery can be prevented from being further discharged due to current consumption of the secondary battery protection integrated circuit. When a potential at the current detection terminal rises above a standby threshold in the over-discharge protection mode, the secondary battery protection integrated circuit determines that the charger is not connected, and then transitions from the over-discharge protection mode to the standby mode (see Patent Document 1).

### [Related-Art Document]

### [Patent Document]

Patent Document 1: Japanese Patent No. 6492740

### SUMMARY

A secondary battery protection integrated circuit in a first aspect of the present disclosure includes:
a power supply terminal;
a ground terminal;
a monitor terminal;
an input terminal;
a resistor disposed between the monitor terminal and the power supply terminal; and
a control circuit configured to
   set the secondary battery protection integrated circuit to a first state in which the resistor is disconnected from the power supply terminal or the monitor terminal,
   set the secondary battery protection integrated circuit to a second state in which the monitor terminal is coupled to the power supply terminal through the resistor, when a signal is applied to the input terminal in the first state, the resistor having a first resistance value, and
   set the secondary battery protection integrated circuit to a third state in which (i) the monitor terminal is coupled to the power supply terminal through the resistor that is set to have a second resistance value, the second resistance value being greater than the first resistance value, and (ii) power consumption of the secondary battery protection integrated circuit is less than that in the first state, when a potential at the monitor terminal becomes higher than a threshold that is less than a potential at the power supply terminal in the second state.

A secondary battery protection integrated circuit in a second aspect of the present disclosure includes:
a power supply terminal;
a ground terminal;
a monitor terminal;
an input terminal;
a resistor disposed between the monitor terminal and the ground terminal;
a control circuit configured to
   set the secondary battery protection integrated circuit to a first state in which the resistor is disconnected from the ground terminal or the monitor terminal,
   set the secondary battery protection integrated circuit to a second state in which the monitor terminal is coupled to the ground terminal through the resistor, when a signal is applied to the input terminal in the first state, the resistor having a first resistance value, and
   set the secondary battery protection integrated circuit to a third state in which (i) the monitor terminal is coupled to the power supply terminal through the resistor that is set to have a second resistance value, the second resistance value being greater than the first resistance value, and (ii) power consumption of the secondary battery protection integrated circuit is less than that in the first state, when a potential at the monitor terminal becomes less than a threshold that is higher than a potential at the ground terminal in the second state.

A secondary battery protection integrated circuit in a third aspect of the present disclosure includes:
a power supply terminal;
a ground terminal;
a monitor terminal;
an input terminal;
a control terminal;
a resistor disposed between the monitor terminal and the power supply terminal; and
a control circuit configured to
   set the secondary battery protection integrated circuit to a first state in which the resistor is disconnected from the power supply terminal or the monitor terminal,
   set the secondary battery protection integrated circuit to a second state in which (i) the monitor terminal is coupled to the power supply terminal through the resistor, the resistor having a first resistance value, and (ii) a signal to stop discharging of a secondary battery is output through the control terminal, when a power supply voltage between the power supply terminal and the ground terminal is less than a predetermined detection voltage in the first state, and
   set the secondary battery protection integrated circuit to a third state in which (i) the monitor terminal is coupled to the power supply terminal through the resistor that is set to have a second resistance value, the second resistance value being greater than the first resistance value, and (ii) power consumption of the secondary battery protection integrated circuit is less than that in the first state, when a potential at the monitor terminal becomes higher than a threshold that is less than a potential at the power supply terminal in the second state.

A secondary battery protection integrated circuit in a fourth aspect of the present disclosure includes:
a power supply terminal;
a ground terminal;
a monitor terminal;
an input terminal;
a control terminal:
   a resistor disposed between the monitor terminal and the ground terminal; and
   a control circuit configured to
      set the secondary battery protection integrated circuit to a first state in which the resistor is disconnected from the ground terminal or the monitor terminal,
      set the secondary battery protection integrated circuit to a second state in which (i) the monitor terminal is coupled to the power supply terminal through the resistor, the resistor having a first resistance value, and (ii) a signal to stop discharging of a secondary battery is output through the control terminal state, when a power supply voltage between the power supply terminal and the ground terminal is less than a predetermined detection voltage in the first state, and
      set the secondary battery protection integrated circuit to a third state in which (i) the monitor terminal is coupled to the ground terminal through the resistor that is set to have a second resistance value, the second resistance value being greater than the first resistance value, and (ii) power consumption of the secondary battery protection integrated circuit is less than that in the first state, when a potential at the monitor terminal becomes less than a threshold that is higher than a potential at the ground terminal in the second state.

### BRIEF DESCRIPTION OF THE DRAWINGS

FIG. 1 is a circuit block diagram showing a configuration example of a system including a secondary battery protection integrated circuit according to a first embodiment.
FIG. 2 is a diagram showing an example of operation waveforms of the secondary battery protection integrated circuit according to the first embodiment.
FIG. 3 shows an example of operation waveforms of the secondary battery protection integrated circuit in a first comparative example.
FIG. 4 shows an example of state transitions of the secondary battery protection integrated circuit according to the first embodiment.
FIG. 5 is a circuit block diagram showing an example of the system including the secondary battery protection integrated circuit according to a second embodiment.
FIG. 6 is a diagram showing an example of operation waveforms of the secondary battery protection integrated circuit according to a second embodiment.
FIG. 7 is a diagram showing an example of operation waveforms of the secondary battery protection integrated circuit in a second comparative example.
FIG. 8 is diagram showing an example of state transitions of the secondary battery protection integrated circuit according to the second embodiment.
FIG. 9 is a diagram showing an example of state transitions of the secondary battery protection integrated circuit in a first modification of the first embodiment.
FIG. 10 is a diagram showing an example of state transitions of the secondary battery protection integrated circuit in a first modification of the second embodiment.

### DETAILED DESCRIPTION

The inventor of this application have recognized the following information in related art. In Patent Document 1, if it takes time for a potential at a current detection terminal to reach a standby threshold due to impedance of a load or the like that is powered by a secondary battery, transition to standby mode that reduces power consumption may be delayed.

The present disclosure provides a secondary battery protection integrated circuit, a secondary battery protection device, and a battery device that can rapidly transition to a state that reduces power consumption when a predetermined condition is satisfied.

Various embodiments of the present disclosure will be described below with reference to the drawings.

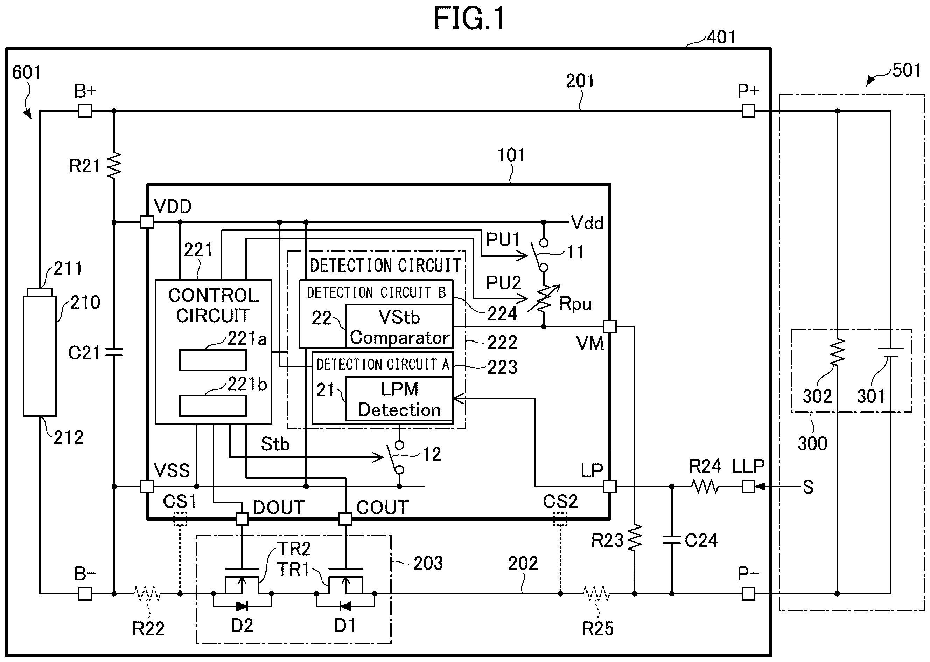

FIG. 1 is a circuit block diagram showing a configuration example of a system including a secondary battery protection integrated circuit according to a first embodiment. A system 501 shown in FIG. 1 includes a battery device 401 and an electronic device 300.

The electronic device 300 is a device that is to be connected to the battery device 401. The electronic device 300 may be a charger 301 that charges the battery device 401, or may be a load 302 that operates by power supplied from the battery device 401. Specific examples of such a load include a cellular phone, a smartphone, a tablet device, an earpiece, and the like. The electronic device 300 is not limited to the above devices.

The battery device 401 may be externally connected to the load 302 or incorporated into the load 302. The battery device 401 is, for example, a battery pack detachably accommodated in the load 302. The battery device 401 can supply the power to the load 302 while being connected to the load 302. The battery device 401 and the electronic device 300 are connected to each other via a plurality of terminals (which include a positive power supply terminal (terminal P+) and a negative power supply terminal (terminal P-)) shown in FIG. 1. For example, the terminal P+ and the terminal P- are electrically connected to the charger 301 when the secondary battery 210 is charged.

The battery device 401 includes a secondary battery 210 and a battery protection device 601.

The secondary battery 210 is an example of a chargeable/dischargeable battery. The secondary battery 210 supplies the power to the load 302 that is connected to the terminal P+ and the terminal P-. The secondary battery 210 can be charged by the charger 301 connected to the terminal P+ and the terminal P-. Specific examples of the secondary battery 210 include a lithium ion battery, a lithium polymer battery, and the like. The secondary battery 210 has a positive electrode 211 and a negative electrode 212.

The battery protection device 601 is an example of the secondary battery protection device that operates using the secondary battery 210 as a power source. The battery protection device 601 protects the secondary battery 210 from overcharging or the like by controlling the charging of the secondary battery 210. The battery protection device 601 also protects the secondary battery 210 from over-discharging or the like by controlling the discharging of the secondary battery 210. The battery protection device 601 includes, for example, a terminal P+, the terminal P-, a terminal LLP, a terminal B+, a terminal B-, resistors R21, R23, and R24, capacitors C21 and C24, a power line 201, a ground line 202, a switch circuit 203, and a protection IC (Integrated Circuit) 101.

The battery protection device 601 is, for example, a component that includes a substrate on which at least the protection IC 101 is mounted.

The terminal P+ is an example of a load positive terminal, to which the power line of the electronic device 300 is connected. The terminal P- is an example of a load negative terminal, to which the ground line of the electronic device 300 is connected. The terminal B+ is an example of a battery positive terminal, to which the positive electrode 211 of the secondary battery 210 is connected. The terminal B- is an example of the battery negative terminal, to which the negative electrode 212 of the secondary battery 210 is connected.

The terminal B+ and the terminal P+ are connected by the power line 201, which is a positive current path. The power line 201 is a power supply path connecting the terminal B+ and the terminal P+. The power line 201 functions as both a charge path through which a charging current of the secondary battery 210 flows and a discharge path through which a discharging current of the secondary battery 210 flows.

The terminal B- and the terminal P- are connected by a ground line 202 as a negative-side current path. The ground line 202 is a power supply path connecting the terminal B- and the terminal P-. The ground line 202 functions as both a charge path through which the charging current of the secondary battery 210 flows and a discharge path through which the discharging current of the secondary battery 210 flows.

The switch circuit 203 is provided on the ground line 202 between the terminal B- and the terminal P-. The switch circuit 203 includes, for example, a charge control transistor TR1 and a discharge control transistor TR2. The switch circuit 203 is a series circuit in which the charge control transistor TR1 and the discharge control transistor TR2 are connected in series. The charge control transistor TR1 is a semiconductor switching element that interrupts the charge path for the secondary battery 210. The discharge control transistor TR2 is a semiconductor switching element that interrupts the discharge path for the secondary battery 210.

In the case of FIG. 1, the charge control transistor TR1 interrupts the ground line 202 through which the charging current of the secondary battery 210 flows, and the discharge control transistor TR2 interrupts the ground line 202 through which the discharging current of the secondary battery 210 flows. The charge control transistor TR1 and the discharge control transistor TR2 are switching elements that controls the flow of current through the ground line 202 by alternately conducting and interrupting the flow, and these transistors are inserted in series in the ground line 202. The charge control transistor TR1 and the discharge control transistor TR2 are, for example, N-channel MOSFETs (Metal Oxide Semiconductor Field Effect Transistors).

The charge control transistor TR1 has a parasitic diode D1 between a drain and a source, and a forward direction of the parasitic diode D1 is opposite to the direction of the charging current of the secondary battery 210. The charge control transistor TR1 is a switching element that is inserted in series in the ground line 202 such that the forward direction of the parasitic diode D1 matches the direction of a discharging current flow of the secondary battery 210.

The discharge control transistor TR2 has a parasitic diode D2 between a drain and a source, and a forward direction of the parasitic diode D2 is opposite to the direction of the discharging current of the secondary battery 210. The discharge control transistor TR2 is a switching element that is inserted in series in the ground line 202 such that the forward direction of the parasitic diode D2 matches the direction of a charging current flow of the secondary battery 210.

The protection IC 101 is an example of the secondary battery protection integrated circuit used to protect the secondary battery. The protection IC 101 operates using the secondary battery 210 as a power source.

The protection IC 101 is an example of the secondary battery protection integrated circuit used to protect the secondary battery. The protection IC 101 operates using the secondary battery 210 as a power source.

The protection IC 101 has a function of protecting the secondary battery 210 from over-discharging or the like by controlling the switch circuit 203. For example, the protection IC 101 protects the secondary battery 210 from abnormal charging by turning off the charge control transistor TR1 when the abnormal charging (such as overcharging or overcurrent in the charging direction (charging overcurrent)) is detected by a detection circuit 222. On the other hand, the protection IC 101 protects the secondary battery 210 from abnormal discharging by turning off the discharge control transistor TR2 when the abnormal discharging (such as over-discharging or overcurrent in the discharge direction (discharging overcurrent) is detected by the detection circuit 222.

The protection IC 101 includes, for example, a charge control terminal (terminal COUT), a discharge control terminal (terminal DOUT), a detection terminal (terminal VM), a power supply terminal (terminal VDD), a ground terminal (terminal VSS), and an input terminal (terminal LP). Each of these terminals is, for example, an external connection terminal that connects an internal circuit of the protection IC 101 to the outside of the protection IC 101.

The terminal COUT is connected to a gate (control electrode) of the charge control transistor TR1, and outputs a signal to turn the charge control transistor TR1 on or off. The terminal DOUT is connected to a gate (control electrode) of the discharge control transistor TR2, and outputs a signal to turn the discharge control transistor TR2 on or off.

The terminal VM is an example of a monitor terminal used for monitoring a potential at the terminal P-, and is connected to the terminal P-. The terminal VM is used, for example, by the control circuit 221 in the protection IC 101 to monitor whether the electronic device 300 (the load 302 or the charger 301) is connected. The terminal VM is connected to the ground line 202 through the resistor R23, between the switch circuit 203 and the terminal P-. The terminal VM is electrically connected to the ground line 202 on an opposite side of the switch circuit 203 from the secondary battery 210.

The terminal VM may be used to detect the charging overcurrent or discharging overcurrent that flows into the secondary battery 210.

The terminal VDD is a power supply terminal of the protection IC 101, and is connected to the positive electrode 211 and the power line 201 of the secondary battery 210, through the resistor R21. The terminal VSS is a ground terminal of the protection IC 101, and is connected to the negative electrode 212 of the secondary battery 210. The capacitor C21 is connected between the terminal VDD and the terminal VSS. The terminal VSS is connected to the ground line 202 between the switch circuit 203 and the negative electrode 212. In this example, the terminal VSS is connected to the ground line 202 between the discharge control transistor TR2 and the negative electrode 212.

The terminal LP is a terminal to which a signal S transmitted from an external device such as the electronic device 300 is input via the terminal LLP, and the terminal LP is electrically connected to the terminal LLP. A resistor R24 is inserted in series in a signal path between the terminal LP and the terminal LLP. A capacitor C24 is connected between the terminal LP and the ground line 202. The resistor R24 and the capacitor C24 function as a low-pass filter that attenuates noise that is superimposed on the signal S.

The signal S is a signal indicating that an external device, such as the electronic device 300, requests the protection IC 101 to transition to power saving mode, such as low power mode LPM (details will be described later).

The protection IC 101 may include a terminal CS1 as an example of the monitor terminal that is used for monitoring the charging current or the discharging current that flows through the secondary battery 210. The terminal CS1 is connected to the ground line 202 between the terminal B- and the switch circuit 203 (the source of the discharge control transistor TR2). When the terminal CS1 is provided, the resistor R22 inserted in series in the ground line 202 has one end connected to the terminal VSS and the other end connected to the terminal CS1. By detecting a potential difference between the terminal VSS and the terminal CS1, a detection circuit A 223 in the protection IC 101 can detect the charging overcurrent or the discharging overcurrent that flows through the secondary battery 210. The resistor R22 functions as a sense resistor for detecting the current that flows through the secondary battery 210.

As an example of the monitor terminal used for monitoring the charging current or the discharging current that flows through the secondary battery 210, the protection IC 101 may be provided with a terminal CS2 instead of the terminal CS1. The terminal CS2 is connected to the ground line 202 between the terminal P- and the switch circuit 203 (the source of the charge control transistor TR1). When the terminal CS2 is provided, one end of a resistor R25 that is inserted in series in the ground line 202 is connected to the terminal CS2, and the other end of the resistor R25 is connected to the terminal P- and is connected to the terminal VM through the resistor R23. By detecting a potential difference between the terminal CS2 and the terminal VM, the detection circuit A 223 in the protection IC 101 can detect the charging overcurrent or the discharging overcurrent that flows through the secondary battery 210. The resistor R25 functions as a sense resistor for detecting the current that flows through the secondary battery 210.

The protection IC 101 includes the detection circuit 222, the control circuit 221, a resistor Rpu, and switches 11 and 12.

The detection circuit 222 includes an overcharge detection circuit that detects overcharging of the secondary battery 210 by monitoring the power supply voltage Vdd between the terminal VDD and the terminal VSS. The overcharge detection circuit compares the power supply voltage Vdd with an overcharge detection voltage Vdet1, and generates an overcharge detection signal indicating that the overcharging of the secondary battery 210 is detected, when the power supply voltage Vdd is higher than the overcharge detection voltage Vdet1.

The detection circuit 222 includes a charging overcurrent detection circuit that detects the charging overcurrent of the secondary battery 210 by monitoring a potential difference ΔV2 between the terminal VSS and the terminal VM (alternatively, between the terminal VSS and the terminal CS1, or between the terminal CS2 and the terminal VM). The charging overcurrent detection circuit compares the potential difference ΔV2 with a charging overcurrent detection voltage Vdet4, and generates a charging overcurrent detection signal indicating the charging overcurrent of the secondary battery 210 is detected, when the potential difference ΔV2 is less than the charging overcurrent detection voltage Vdet4 with reference to the terminal VSS or the terminal CS2. In other words, the charging overcurrent detection circuit generates the charging overcurrent detection signal, when the voltage at the terminal VM or the terminal CS1 with reference to the terminal VSS, or the voltage at the terminal VM with reference to the terminal CS2, is less than the charging overcurrent detection voltage Vdet4.

The control circuit 221 includes a charge control circuit 221a that controls the charging of the secondary battery 210. The charge control circuit 221a outputs a signal (e.g., a low-level gate control signal) from the terminal COUT to switch the charge control transistor TR1 from on to off, when the overcharging of the secondary battery 210 is continuously detected by the detection circuit 222 for a predetermined detection delay time period tVdet1. The charge control circuit 221a outputs a signal (e.g., a low-level gate control signal) from the terminal COUT to switch the charge control transistor TR1 from on to off, when the overcharging of the secondary battery 210 is continuously detected by the detection circuit 222 for a predetermined detection delay time period tVdet4.

By turning off the charge control transistor TR1, the control circuit 221 prohibits the current in the direction of charging the secondary battery 210 from flowing into the ground line 202. As a result, the charging of the secondary battery 210 is stopped, and thus the protection IC 101 can protect the secondary battery 210 from overcharging or overcharging.

The detection circuit 222 includes an over-discharge detection circuit that detects over-discharging of the secondary battery 210 by monitoring the power supply voltage Vdd between the terminal VDD and the terminal VSS. The over-discharge detection circuit compares the power supply voltage Vdd with an over-discharge detection voltage Vdet2, and generates an over-discharge detection signal indicating that the over-discharging of the secondary battery 210 is detected, when the power supply voltage Vdd is less than the over-discharge detection voltage Vdet2.

The detection circuit 222 includes a discharging overcurrent detection circuit that detects the discharging overcurrent of the secondary battery 210 by monitoring the potential difference ΔV2 between the terminal VSS and the terminal VM (alternatively, between the terminal VSS and the terminal CS1, or between the terminal CS2 and the terminal VM). The discharging overcurrent detection circuit compares the potential difference ΔV2 with a discharging overcurrent detection voltage Vdet3, and generates a discharging overcurrent detection signal indicating that the discharging overcurrent of the secondary battery 210 is detected, when the potential difference ΔV2 is higher than the discharging overcurrent detection voltage Vdet3 with reference to the terminal VSS or the terminal CS2. In other words, the discharging overcurrent detection circuit generates a discharging overcurrent detection signal, when the voltage at the terminal VM or the terminal CS1 with reference to the terminal VSS, or the voltage at the terminal VM with reference to the terminal CS2, is higher than the discharging overcurrent detection voltage Vdet3.

The control circuit 221 includes a discharge control circuit 221b that controls the discharging of the secondary battery 210. When the over-discharging of the secondary battery 210 is continuously detected by the detection circuit 222 for a predetermined detection delay time period tVdet2, the discharge control circuit 221b outputs a signal (e.g., a low-level gate control signal) from the terminal DOUT to switch the discharge control transistor TR2 from on to off. When the discharging overcurrent of the secondary battery 210 is continuously detected by the detection circuit 222 for a predetermined detection delay time period tVdet3, the discharge control circuit 221b outputs a signal (e.g., a low-level gate control signal) from the terminal DOUT to switch the discharge control transistor TR2 from on to off.

By turning off the discharge control transistor TR2, the control circuit 221 prohibits the current in the direction of discharging the secondary battery 210 from flowing into the ground line 202. In this arrangement, the discharging of the secondary battery 210 is stopped, and thus the protection IC 101 can protect the secondary battery 210 from over-discharging or discharging overcurrent.

The detection circuit 222 includes a signal detection circuit 21 that detects the signal S that is input from the terminal LP. The signal detection circuit 21 outputs, to the control circuit 221, a signal detection signal indicating that the signal S input from the terminal LP is detected, upon detection of the input signal S to request the transition to the power saving mode, such as the low power mode LPM.

The detection circuit 222 includes the detection circuit A 223 and a detection circuit B 224. The detection circuit B 224 includes a comparator circuit 22 that compares a potential at the terminal VM with a first potential (threshold) Vstb that is less than a potential at the terminal VDD, and that outputs a comparison result to the control circuit 221. The first potential Vstb, which is also referred to as a standby threshold, is set to, for example, VDD - 0.9 [V].

The resistor Rpu is a pull-up resistor disposed between the terminal VM and the terminal VDD. A resistance value of the resistor Rpu varies according to a signal PU2 that is generated by the control circuit 221. A configuration in which the resistance value of the resistor Rpu varies according to an input signal, such as the signal PU2, may be a publicly-known configuration. For example, the resistor Rpu may have a configuration that selects one from multiple resistors having different resistance values in accordance with the content of the signal PU2.

The switch 11 determines whether to pull up the terminal VM to the terminal VDD through the resistor Rpu, based on the signal PU1 that is generated by the control circuit 221. The switch 11 is connected in series with the resistor Rpu. The switch 11 may be arranged on a pull-up line between the resistor Rpu and the terminal VDD, or may be arranged on a pull-up line between the terminal VM and the resistor Rpu.

The switch 12 determines whether to interrupt power supply to the detection circuit A 223 that is a specific portion of the detection circuit 222, based on the signal Stb that is generated by the control circuit 221. Examples of the detection circuit A 223 (a target circuit to be disconnected from power supply) include an overcharge detection circuit that detects overcharging, a charging overcurrent detection circuit that detects overcharging, an over-discharge detection circuit that detects over-discharging, a discharging overcurrent detection circuit that detects discharging overcurrent, or the signal detection circuit 21 that detects the signal S. The switch 12 may be disposed so as to be capable of interrupting a power supply path between a target circuit to be disconnected from the power supply and the terminal VSS, or may be disposed so as to be capable of interrupting the power supply path between the target circuit to be disconnected from the power supply and the terminal VDD.

By turning off the switch 11 in response to the signal PU1, the control circuit 221 sets a first state S11 in which the resistor Rpu is disconnected from the terminal VDD or the terminal VM. The first state S11 is a state in which the protection IC 101 is in normal operation mode.

In the first state S11, the control circuit 221 outputs a signal (e.g., a high level "H" signal) to permit the charging of the secondary battery 210 from the terminal COUT, and outputs a signal (e.g., a high level "H" signal) to permit the discharging of the secondary battery 210 from the terminal DOUT. In this arrangement, each of the charging and the discharging of the secondary battery 210 is enabled in the first state 511.

In the first state S11, the control circuit 221 turns off the switch 11, and thus high impedance (HiZ) occurs between the terminal VM and the terminal VDD. In the first state S11, the control circuit 221 turns on the switch 12 in response to the signal Stb. As a result, power is supplied to the detection circuit 222, so that the detection circuit 222 can operate.

In the first state S11, when the signal detection circuit 21 detects the input signal S, the control circuit 221 turns on the switch 11 in response to the signal PU1. By turning on the switch 11, the control circuit 221 sets a second state S12 in which the terminal VM is pulled up to the terminal VDD through the resistor Rpu having the first resistance value R1. The second state S12 is a state in which the protection IC 101 is in the low power mode LPM.

In the second state S12, the control circuit 221 outputs a signal (e.g., a high level "H" signal) to permit the charging of the secondary battery 210 from the terminal COUT, and outputs a signal (e.g., a low level "L" signal) to stop the discharging of the secondary battery 210 from the terminal DOUT. In this arrangement, the discharge control transistor TR2 is turned off, so that the discharging of the secondary battery 210 is stopped. As a result, a decrease in the remaining capacity of the secondary battery 210 is reduced, and power consumption of the battery device 401 is reduced. In the second state S12, by setting, to sleep mode, an internal circuit that does not need to operate, the control circuit 221 may reduce the power consumption of the protection IC 101 itself.

In response to the signal PU2, the control circuit 221 sets the resistor Rpu in the second state S12 to have the first resistance value R1 (for example, 25 kQ). In the second state S12, the terminal VM is pulled up to the terminal VDD through the resistor Rpu having the first resistance value R1, and thus the potential at the terminal VM starts to rise toward the potential at the terminal VDD.

In the second state S12, when the comparator circuit 22 detects that the potential at the terminal VM is higher than the first potential Vstb, the control circuit 221 sets the resistor Rpu to have the second resistance value R2 that is greater than the first resistance value R1, to thereby set a third state S13 in which the terminal VM is connected to the terminal VDD. The third state S13 is a state in which the protection IC 101 is in standby mode in which the power consumption of the protection IC 101 is less than that in the first state S11 (normal operation mode).

In the third state S13, the control circuit 221 outputs a signal (e.g., a low level "L" signal) to stop the discharging of the secondary battery 210 from the terminal DOUT. In this arrangement, in the third state S13, following the state S12, the discharging of the secondary battery 210 continues to be stopped. As a result, a decrease in the remaining capacity of the secondary battery 210 is reduced, and the power consumption of the battery device 401 is reduced.

In the third state S13, the control circuit 221 turns off the switch 12 in response to the signal Stb, thereby interrupting power supply to the detection circuit A 223 that is a specific portion of the detection circuit 222. The control circuit 221 interrupts the power supply to an internal circuit that does not need to operate in the third state S13, thereby reducing the power consumption of the protection IC 101 itself. In the third state S13, by interrupting power supply to the charge control circuit 221a, the control circuit 221 may further reduce the power consumption of the protection IC 101 itself.

In the third state S13, the control circuit 221 sets, in response to the signal PU2, the resistor Rpu to have a second resistance value R2 (for example, 1 MQ) that is greater than the first resistance value R1. The second resistance value R2 is preferably significantly greater than the resistance value (for example, 1 kQ) of the resistor R23. In the third state S13, the terminal VM is pulled up to the terminal VDD through the resistor Rpu having a relatively great second resistance value R2, and thus potentials at the terminal VM and the terminal P-can be stabilized with respect to potentials at the terminal VDD, the terminal P+, and the terminal B+. In this arrangement, power consumption of the protection IC 101 and the battery device 401 can be stably reduced in the standby mode (the third state S13).

As described above, in the first embodiment, the first resistance value R1 of the resistor Rpu that pulls up the terminal VM to the terminal VDD in the second state S12, is less than the second resistance value R2 of the resistor Rpu that pulls up the terminal VM to the terminal VDD in the third state S13. In the second state S12, the terminal VM is pulled up to the terminal VDD through the resistor Rpu having a relatively small first resistance value R1. In this arrangement, a speed (rate) at which the potential at the terminal VM rises in the second state S12 becomes less influenced by external impedance of the electronic device 300 or the like. In this arrangement, in the second state S12, the potential at the terminal VM rises rapidly toward the potential at the terminal VDD. Further, after the potential at the terminal VM is raised to a predetermined value, the potential at the terminal VM can be stabilized by setting the resistor Rpu to have the second resistance value R2 that is greater than the first resistance value R1.

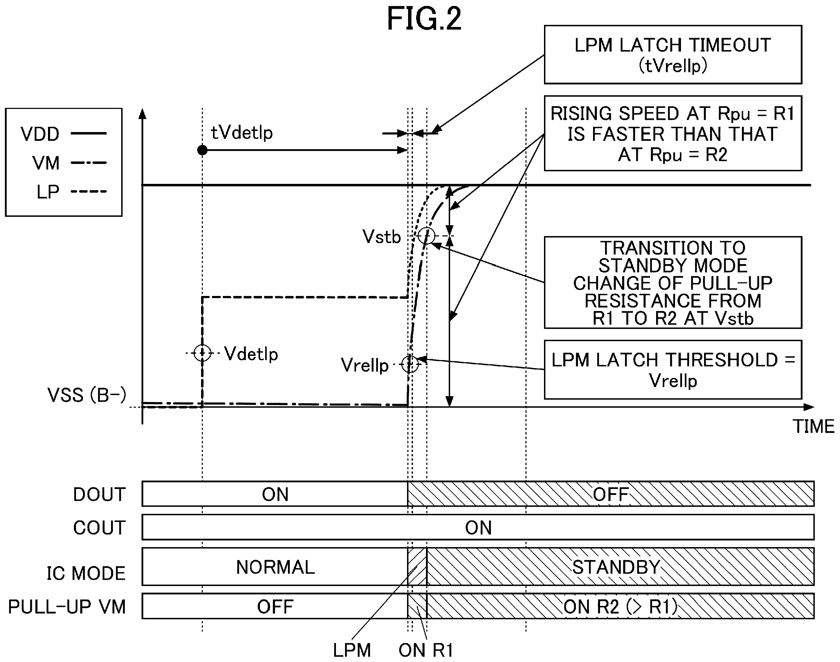

FIG. 2 is a diagram showing an example of operation waveforms of the secondary battery protection integrated circuit according to the first embodiment. The vertical axis of the graph represents the potential, and the horizontal axis represents the time. A solid line represents the potential at the terminal VDD, a dash-dot line represents the potential at the terminal VM, and a dashed line represents the potential at the terminal LP. Bars of DOUT and COUT below the graph represent signals that are respectively output from the terminals DOUT and COUT of the protection IC 101. A bar of IC MODE indicates the operation mode of the protection IC. A bar of pull-up VM indicates a state in which the control circuit 221 controls the resistor Rpu. In the low power mode LPM (in the second state S12), the terminal VM is pulled up to the terminal VDD through the resistor Rpu having a relatively small first resistance value R1, so that the potential at the terminal VM rapidly rises toward the potential at the terminal VDD. In this arrangement, the potential at the terminal VM rapidly exceeds the first potential Vstb, so that the protection IC 101 rapidly transitions from the low power mode LPM (the second state S12) to the standby mode (the third state S13). As a result, a time period of the operation that consumes more power than the standby mode is shortened, and the effect of reducing the power consumption is enhanced.

When the protection IC 101 transitions to the standby mode (the third state S13), the terminal VM is pulled up to the terminal VDD through the resistor Rpu having the second resistance value R2 that is greater than the first resistance value R1. As a result, the potential at the terminal VM gradually rises toward the potential at the terminal VDD after exceeding the first potential Vstb. In this arrangement, when the resistor Rpu has the first resistance value R1, the speed at which the potential at the terminal VM rises toward the potential at the terminal VDD is faster than when the resistor Rpu has the second resistance value R2.

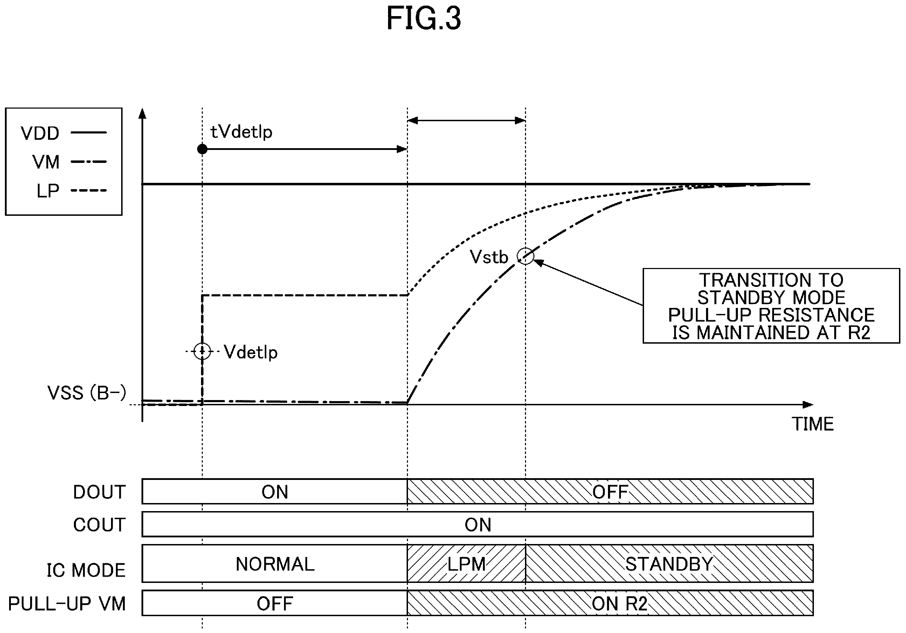

FIG. 3 is a diagram showing an example of operation waveforms of the secondary battery protection integrated circuit in a first comparative example. In the first comparative example, the resistor Rpu in the low power mode LPM is set to have the same resistance value (in this example, 1 MΩ) as in the standby mode. In the present embodiment, after the protection IC transitions to the low power mode LPM (the second state S12), a rising speed (rise rate) of the potential at the terminal VM is gentle from immediately after the potential starts rising as shown in FIG. 3, due to influence of external impedance of the electronic device 300 or the like. In such a situation, the transition from the low power mode LPM (the second state S12) to the standby mode (the third state S13) may be delayed.

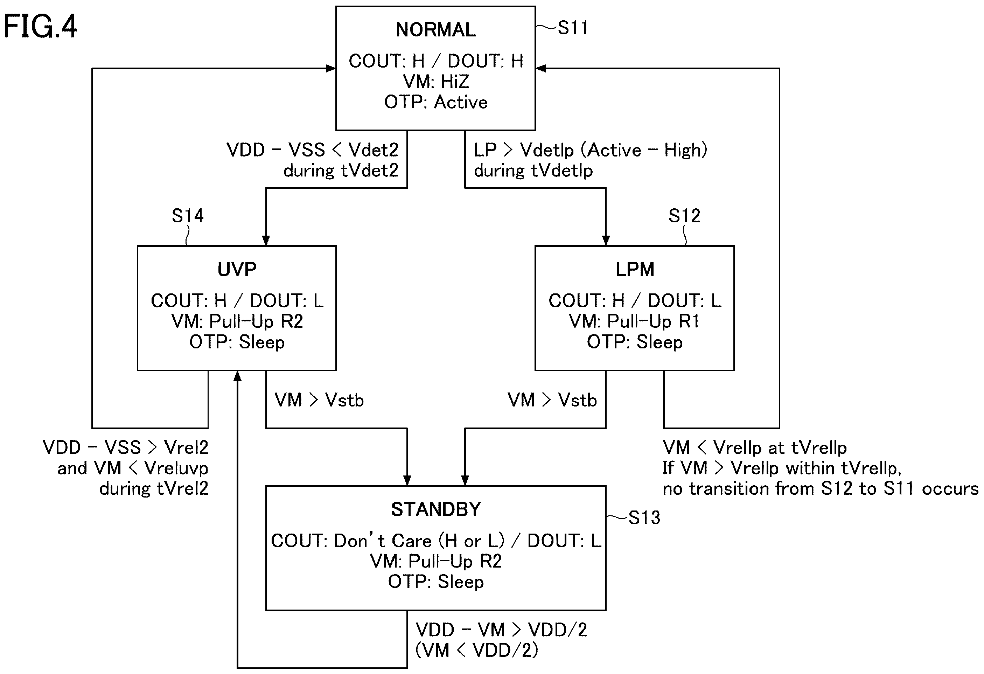

FIG. 4 is a diagram showing an example of state transitions of the secondary battery protection integrated circuit according to the first embodiment. Hereinafter, an operation example of the protection IC 101 shown in FIG. 1 will be described with reference to FIGS. 1 and 2. In each state, a state of the protection IC; outputs of the terminals COUT and DOUT; a state of the resistor Rpu that is connected to the terminal VM; and an operation state of OTP (Over Temperature Protection), are shown from the top.

In the normal operation mode (the first state S11) of FIG. 4, the control circuit 221 outputs a signal (e.g., a high level "H" signal) to permit the charging of the secondary battery 210 from the terminal COUT, and outputs a signal (e.g., a high level "H" signal) to permit the discharging of the secondary battery 210 from the terminal DOUT. In the first state S11, the control circuit 221 turns off the switch 11, and thus high impedance (HiZ) occurs between the terminal VM and the terminal VDD.

When the signal S is an active-high signal, for example, when the potential at the terminal LP is higher than a predetermined detection threshold Vdetlp, the signal detection circuit 21 outputs, to the control circuit 221, a signal detection signal indicating that the input signal S from the terminal LP is detected. Alternatively, when the signal S is an active-low signal, for example, when the potential at the terminal LP is less than the predetermined detection threshold Vdetlp, the signal detection circuit 21 outputs, to the control circuit 221, a signal detection signal indicating that the input signal S from the terminal LP is detected.

When the signal detection signal is continuously detected for the predetermined delay time period tVdetlp (see FIG. 2), the control circuit 221 cause the protection IC 101 to transition from the normal operation mode (the first state S11) to the low power mode LPM (the second state S12).

When the protection IC transitions to the low power mode LPM (the second state S12) of FIG. 4, the control circuit 221 outputs a signal (e.g., a high level "H" signal) to permit the charging of the secondary battery 210 from the terminal COUT, and outputs a signal (e.g., a low level "L" signal) to stop the discharging of the secondary battery 210 from the terminal DOUT. In the second state S12, the control circuit 221 turns on the switch 11 to thereby pull up the terminal VM to the terminal VDD through the resistor Rpu having the first resistance value R1 (for example, 25 kQ). The control circuit 221 may reduce the power consumption of the protection IC 101 itself by setting, to the sleep mode, an internal circuit (such as an OTP (Over Temperature Protection) circuit) that does not need to operate in the second state S12.

In the second state S12, when the potential at the terminal VM does not exceed, within a predetermined time period tVrellp, the second potential Vrellp (threshold) (for example, VSS + 0.7 [V]) that is less than the first potential Vstb and higher than the ground potential, the control circuit 221 causes the protection IC 101 to transition from the second state S12 to the first state 511. In the second state S12, in order to rapidly raise the potential at the terminal VM toward the potential at the terminal VDD, the terminal VM is pulled up to the terminal VDD through the resistor Rpu having the relatively small first resistance value R1 (for example, 25 kQ). However, due to any reason such as a malfunction, when the potential at the terminal VM does not exceed the second potential Vrellp within the predetermined time period tVrellp, the protection IC 101 can transition back from the second state S12 to the first state 511. For example, if the potential at the terminal VM does not exceed the first potential Vstb ultimately due to the occurrence of an abnormality, the protection IC 101 remains in the second state S12 without transitioning to other states, and power supply from the secondary battery 210 to the system 501 is interrupted and the system 501 could not recover. When such an abnormality is detected, the control circuit 221 can cause the protection IC 101 to return to the first state S11. As a result, the power supply from the secondary battery 210 to the system 501 is enabled, thereby allowing the system 501 to perform a recovery operation.

In the second state S12, when the potential at the terminal VM exceeds the second potential Vrellp (for example, VSS + 0.7 [V]) within the predetermined time period tVrellp, the control circuit 221 does not cause the protection IC 101 to transition from the second state S12 to the first state 511. In this arrangement, after determining that there are no abnormalities, the operation mode of the IC protection IC 101 can be latched in the second state S12 to prevent returning to the first state S11 even when noise occurs.

In the second state S12, when the potential at the terminal VM becomes higher than the first potential Vstb (for example, VDD - 0.9 [V]), the control circuit 221 causes the protection IC 101 to transition from the low power mode LPM (the second state S12) to the standby mode (third state S13).

When the protection IC 101 transitions to the standby mode (the third state S13) in FIG. 4, the control circuit 221 outputs a signal (e.g., a low level "L" signal) to stop the discharging of the secondary battery 210 from the terminal DOUT. In the third state S13, the control circuit 221 sets the terminal COUT in a don't care state (either the H or L signal can be output). In the third state S13, the control circuit 221 causes the terminal VM to be pulled up to the terminal VDD through the resistor Rpu having the second resistance value R2 (in this example, 1 MQ). By setting, to the sleep mode, an internal circuit (such as an OTP (Over Temperature Protection) circuit) that does not need to operate in the second state S12, the control circuit 221 may reduce the power consumption of the protection IC 101 itself.

On the other hand, in the normal operation mode (the first state S11) of FIG. 4, the control circuit 221 causes the protection IC 101 to transition from the normal operation mode (the first state S11) to over-discharge protection mode UVP (a fourth state S14), when the detection circuit 222 continuously detects over-discharging of the secondary battery 210 for a predetermined detection delay time period tVdet2. The detection circuit 222 detects the over-discharging of the secondary battery 210 when the power supply voltage Vdd between the terminal VDD and the terminal VSS is less than the over-discharge detection voltage Vdet2.

When the protection IC 101 transitions to the over-discharge protection mode UVP (the fourth state S14), the control circuit 221 outputs a signal (e.g., a high level "H" signal) to permit charging of the secondary battery 210 from the terminal COUT, and outputs a signal (e.g., a low level "L" signal) to stop discharging of the secondary battery 210 from the terminal DOUT. In the fourth state S14, when the switch 11 is turned on, the control circuit 221 causes the terminal VM to be pulled up to the terminal VDD through the resistor Rpu having the second resistance value R2 (in this example, 1 MQ). By setting, to the sleep mode, an internal circuit (such as an OTP (Over Temperature Protection) circuit) that does not need to operate in the fourth state S14, the control circuit 221 may reduce the power consumption of the protection IC 101 itself.

In the fourth state S14, when the potential at the terminal VM becomes higher than the first potential Vstb (for example, VDD - 0.9 [V]), the control circuit 221 causes the protection IC 101 to transition from the over-discharge protection mode UVP (the fourth state S14) to the standby mode (the third state S13). The first potential Vstb, which is a transition threshold used to transition from the over-discharge protection mode UVP (the fourth state S14) to the standby mode (the third state S13), is the same as the first potential Vstb, which is a transition threshold used to transition from the low power mode LPM (the second state S12) to the standby mode (the third state S13). When the transition threshold used for mode transition is identical for two transition routes, a mode transition determination circuit can be shared between both transition routes. As a result, a circuit area can be reduced.

In the third state S13, when the potential at the terminal VM becomes less than a third potential (threshold) (for example, VDD/2) that is less than the potential at the terminal VDD, the control circuit 221 determines that the charger 301 is connected, and thus the protection IC 101 transitions from the third state S13 to the fourth state S14.

In the fourth state S14, the control circuit 221 determines the following condition is satisfied within the predetermined time period tVrel2: (i) the power supply voltage Vdd is higher than the predetermined recovery voltage Vrel2, and (ii) the potential at the terminal VM is equal to or less than a fourth potential Vreluvp (threshold) (for example, VSS + 0.7 [V]). If the condition is satisfied, the control circuit 221 determines that charging by the charger 301 that is connected properly has started, and then the protection IC 101 transitions to the first state S11 without transitioning from the fourth state S14 to the second state S12. In this arrangement, when the protection IC 101 returns to the normal operation mode from the over-discharge protection mode, the protection IC 101 can rapidly transition to the normal operation mode, bypassing the low power mode LPM. In addition, the fourth potential Vreluvp and the second potential Vrellp can be set to the same level. As a result, a judgment potential can be shared, and thus the circuit area can be reduced.

In the first embodiment, when the signal detection circuit 21 detects the input signal S in the first state S11, the control circuit 221 set the protection IC 101 to the second state S12 in which the terminal VM is pulled up to the terminal VDD through the resistor Rpu having the first resistance value R1. However, in a first modification of the first embodiment, in the first state S11, when the detection circuit 222 detects that the power supply voltage Vdd is less than the over-discharge detection voltage Vdet2, the control circuit 221 may set the protection IC 101 to the fourth state S14 in which the terminal VM is pulled up to the terminal VDD through the resistor Rpu having the first resistance value R1.

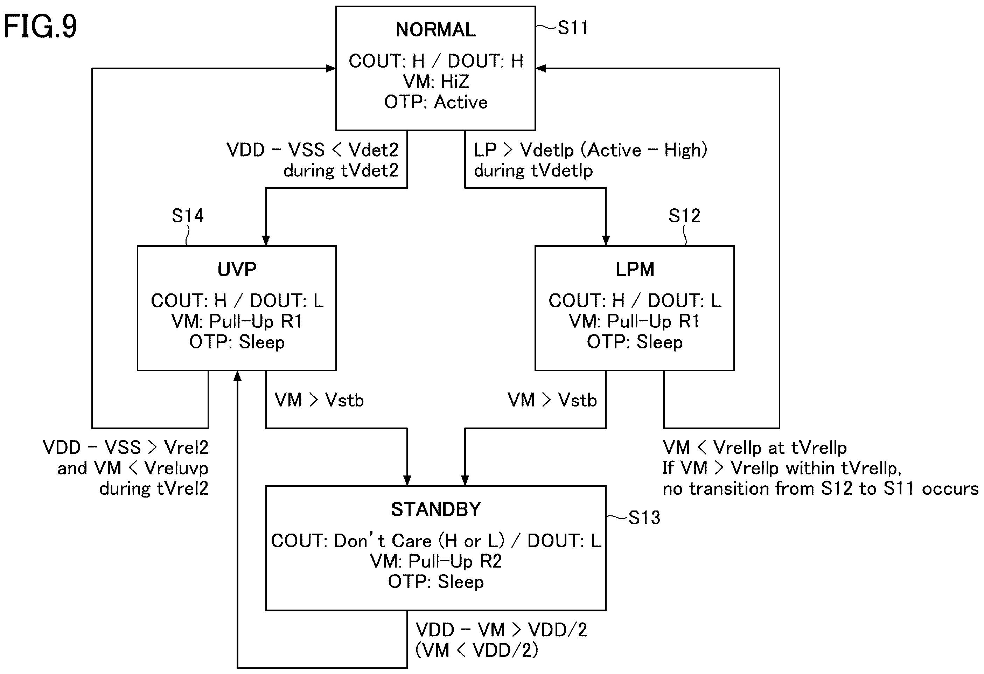

FIG. 9 is a diagram showing an example of state transitions of the secondary battery protection integrated circuit in the first modification of the first embodiment. The first modification of the first embodiment differs from the first embodiment in that the resistor Rpu has the first resistance value R1 in the fourth state S14 of FIG. 4. In the fourth state S14 of FIG. 9, the control circuit 221 causes the terminal VM to be pulled up to the terminal VDD through the resistor Rpu having the first resistance value R1 (for example, 25 kQ). In the over-discharge protection mode (the fourth state S14), the terminal VM is pulled up to the terminal VDD through the resistor Rpu having a relatively small first resistance value R1 (for example, 25 kQ), and thus the potential at the terminal VM rapidly rises toward the potential at the terminal VDD. In this arrangement, the potential at the terminal VM rapidly exceeds the first potential Vstb (in this example, VDD - 0.9 [V]), and the protection IC 101 rapidly transitions from the over-discharge protection mode (the fourth state S14) to the standby mode (the third state S13). As a result, a time period of the operation that consumes more power than the standby mode is shortened, and the effect of reducing the power consumption is enhanced.

Other configurations in the first modification of the first embodiment are the same as those of the first embodiment, and these conditions are omitted by referring to the description of the first embodiment described above.

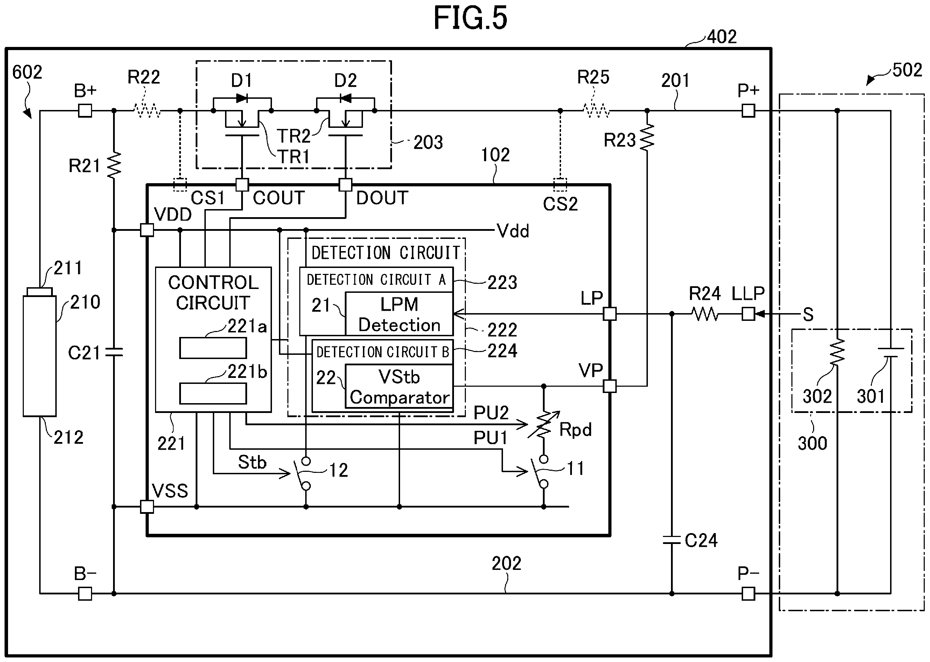

FIG. 5 is a circuit block diagram showing an example of the system including the secondary battery protection integrated circuit according to a second embodiment. In the second embodiment, description of the configuration, the operation, and the effect similar to those of the above-described embodiments is omitted by referring to the above-described description. The second embodiment differs from the first embodiment in that the switch circuit 203 is provided on the high-side power line 201.

A system 502 shown in FIG. 5 includes a battery device 402 and the electronic device 300. The battery device 402 includes a secondary battery 210 and a battery protection device 602. The battery protection device 602 is, for example, a component including a substrate on which at least a protection IC 102 is mounted. The protection IC 102 includes, for example, a charge control terminal (terminal COUT), a discharge control terminal (terminal DOUT), a detection terminal (terminal VP), a power supply terminal (terminal VDD), a ground terminal (terminal VSS), an input terminal (terminal LP), a detection circuit 222, a control circuit 221, a resistor Rpd, and switches 11 and 12. The terminal VP has the same function as the terminal VM in the first embodiment.

The protection IC 102 may include a terminal CS1 as an example of a monitor terminal used for monitoring the charging current or the discharging current that flows through the secondary battery 210. The terminal CS1 is connected to the power line 201 between the terminal B+ and the switch circuit 203 (the source of the charge control transistor TR1). When the terminal CS1 is provided, one end of the resistor R22 that is inserted in series in the power line 201 is connected to the terminal VDD, and the other end of the resistor R22 is connected to the terminal CS1. By detecting a potential difference between the terminal VDD and the terminal CS1, a detection circuit A 223 in the protection IC 102 can detect charging overcurrent or discharging overcurrent that flows through the secondary battery 210. The resistor R22 functions as a sense resistor used for detecting the current flowing through the secondary battery 210. When resistor R22 is provided, the resistor R21 can be omitted.

As an example of the monitor terminal used for monitoring the charging current or the discharging current that flows through the secondary battery 210, the protection IC 102 may include a terminal CS2, instead of the terminal CS1. The terminal CS2 is connected to the power line 201 between the terminal P+ and the switch circuit 203 (the source of the discharge control transistor TR2). When the terminal CS2 is provided, a resistor R25, which is inserted in series in the power line 201, has one end connected to the terminal CS2, and has the other end that is connected to the terminal P+ and that is connected to the terminal VP via a resistor R23. By detecting a potential difference between the terminal CS2 and the terminal VP, a detection circuit A 223 in the protection IC 102 can detect the charging overcurrent or the discharging overcurrent that flows through the secondary battery 210. The resistor R25 functions as a sense resistor used for detecting the current flowing through the secondary battery 210.

The detection circuit 222 includes an overcharge detection circuit that detects overcharging of the secondary battery 210 by monitoring the power supply voltage Vdd between the terminal VDD and the terminal VSS. The overcharge detection circuit compares the power supply voltage Vdd with the overcharge detection voltage Vdet1, and generates an overcharge detection signal indicating that the overcharging of the secondary battery 210 is detected, when the power supply voltage Vdd is higher than the overcharge detection voltage Vdet1.

The detection circuit 222 includes a charging overcurrent detection circuit that detects charging overcurrent of the secondary battery 210 by monitoring a potential difference ΔV1 between the terminal VDD and the terminal VP (alternatively, between the terminal VDD and the terminal CS1, or between the terminal CS2 and the terminal VP). The charging overcurrent detection circuit compares the potential difference ΔV1 with the charging overcurrent detection voltage Vdet4, and generates a charging overcurrent detection signal indicating that the charging overcurrent of the secondary battery 210 is detected, when the potential difference ΔV1 is higher than the charging overcurrent detection voltage Vdet4 with reference to the terminal VDD or the terminal CS2. In other words, the charging overcurrent detection circuit generates the charging overcurrent detection signal when the voltage at the terminal VP or the terminal CS1 with reference to the terminal VDD, or the voltage at the terminal VP with reference to the terminal CS2, is higher than the charging overcurrent detection voltage Vdet4.

The detection circuit 222 includes an over-discharge detection circuit that detects over-discharging of the secondary battery 210 by monitoring the power supply voltage Vdd between the terminal VDD and the terminal VSS. The over-discharge detection circuit compares the power supply voltage Vdd with an over-discharge detection voltage Vdet2, and generates an over-discharge detection signal indicating that the over-discharging of the secondary battery 210 is detected, when the power supply voltage Vdd is less than the over-discharge detection voltage Vdet2.

The detection circuit 222 includes a discharging overcurrent detection circuit that detects the discharging overcurrent of the secondary battery 210 by monitoring the potential difference ΔV1 between the terminal VDD and the terminal VP (alternatively, between the terminal VDD and the terminal CS1, or between the terminal CS2 and the terminal VP). The discharging overcurrent detection circuit compares the potential difference ΔV1 with the discharging overcurrent detection voltage Vdet3, and generates a discharging overcurrent detection signal indicating that the discharging overcurrent of the secondary battery 210 is detected, when the potential difference ΔV1 is less than the discharging overcurrent detection voltage Vdet3 with reference to the terminal VDD or the terminal CS2. In other words, the discharging overcurrent detection circuit generates the discharging overcurrent detection signal when the voltage at the terminal VP or the terminal CS1 is less than the discharging overcurrent detection voltage Vdet3 with reference to the terminal CS2.

The detection circuit 222 includes a detection circuit A 223 and a detection circuit B 224. The detection circuit B 224 includes a comparator circuit 22 that compares the potential at the terminal VP with a first potential Vstb that is higher than the potential at the terminal VSS, and outputs a comparison result to the control circuit 221. The first potential Vstb is also referred to as a standby threshold, and is set to, for example, VSS + 0.9 [V].

The resistor Rpd is a pull-down resistor disposed between the terminal VP and the terminal VSS. The resistance value of the resistor Rpd varies according to a signal PU2 that is generated by the control circuit 221. A configuration in which the resistance value of the resistor Rpd varies according to an input signal, such as the signal PU2, may be a publicly-known configuration. For example, the resistor Rpd may have a configuration in which a resistor, corresponding to the content of the signal PU2, is selected from a plurality of resistors having different resistance values.

The switch 11 determines whether the terminal VP is pulled down to the terminal VSS through the resistor Rpd, based on the signal PU1 that is generated by the control circuit 221. The switch 11 is connected in series with the resistor Rpd. The switch 11 may be arranged on a pull-down line between the resistor Rpd and the terminal VSS, or may be arranged on a pull-down line between the terminal VP and the resistor Rpd.

By turning off the switch 11 in response to the signal PU1, the control circuit 221 sets the resistor Rpd to the first state S11 in which the resistor Rpd is disconnected from the terminal VSS or the terminal VP. The first state S11 is a state in which the protection IC 102 is in the normal operation mode.

In the first state S11, the control circuit 221 outputs a signal (e.g., a high level "H" signal) to permit charging of the secondary battery 210 from the terminal COUT, and outputs a signal (e.g., a high level "H" signal) to permit discharging of the secondary battery 210 from the terminal DOUT. In this arrangement, each of the charging and discharging of the secondary battery 210 is enabled in the first state 511.

In the first state S11, the control circuit 221 turns off the switch 11, and thus high impedance (HiZ) occurs between the terminal VP and the terminal VSS. In the first state S11, the control circuit 221 turns on the switch 12 in response to the signal Stb. As a result, power is supplied to the detection circuit 222, so that the detection circuit 222 can operate.

In the first state S11, when the input signal S is detected by the signal detection circuit 21, the control circuit 221 turns on the switch 11 in response to the signal PU1. By turning on the switch 11, the control circuit 221 sets the protection IC 102 to the second state S12 in which the terminal VP is pulled down to the terminal VSS through the resistor Rpd having the first resistance value R1. The second state S12 is a state in which the protection IC 102 is in the low power mode LPM.

In the second state S12, the control circuit 221 outputs a signal (e.g., a high level "H" signal) to permit the charging of the secondary battery 210 from the terminal COUT, and outputs a signal (e.g., a low level "L" signal) to stop the discharge of the secondary battery 210 from the terminal DOUT. In this arrangement, the discharge control transistor TR2 is turned off, and thus the discharging of the secondary battery 210 is stopped. As a result, a decrease in the remaining capacity of the secondary battery 210 is reduced, and power consumption of the battery device 402 is reduced. By setting, to sleep mode, an internal circuit that does not need to operate in the second state S12, the control circuit 221 may reduce the power consumption of the protection IC 102 itself.

In the second state S12, the control circuit 221 sets the resistor Rpd to have the first resistance value R1 (for example, 25 kQ), according to the signal PU2. In the second state S12. the terminal VP is pulled down to the terminal VSS through the resistor Rpd having the first resistance value R1, and thus the potential at the terminal VP starts to decrease toward the potential at the terminal VSS.

In the second state S12, when the comparator circuit 22 detects that the potential at the terminal VP is less than the first potential Vstb, the control circuit 221 sets the resistor Rpd to have the second resistance value R2 that is greater than the first resistance value R1 to thereby set the third state S13 in which the terminal VP is connected to the terminal VSS. In the third state S13, the protection IC 102 is in standby mode in which power consumption of the protection IC 101 is less than that in the first state S11 (normal operation mode) .

In the third state S13, the control circuit 221 outputs a signal (e.g., a low level "L" signal) to stop the discharging of the secondary battery 210 from the terminal DOUT. As a result, in the third state S13, the discharging of the secondary battery 210 continues to be stopped from the second state S12. As a result, a decrease in the remaining capacity of the secondary battery 210 is reduced, and power consumption of the battery device 402 is reduced.

In the third state S13, the control circuit 221 turns off the switch 12 in response to the signal Stb, thereby interrupting power supply to the detection circuit A 223 that is a specific portion of the detection circuit 222. By interrupting the power supply to an internal circuit that does not need to operate in the third state S13, the control circuit 221 reduces the power consumption of the protection IC 102 itself. By interrupting the power supply to the charge control circuit 221a in the third state S13, the control circuit 221 may further reduce the power consumption of the protection IC 102 itself.

In the third state S13, the control circuit 221 sets the resistor Rpd to have the second resistance value R2 (for example, 1 MQ) that is greater than the first resistance value R1, according to the signal PU2. The second resistance value R2 is preferably set to be significantly greater than the resistance value (for example, 1 kQ) of the resistor R23. In the third state S13, the terminal VP is pulled down to the terminal VSS through the resistor Rpd having a relatively great second resistance value R2, and thus the potentials at the terminal VP and the terminal P+ can be stabilized with respect to the potentials of the terminal VSS, the terminal P-, and the terminal B-. In this arrangement, the power consumption of the protection IC 102 and the battery device 402 can be stably reduced in the standby mode (the third state S13).

In the second embodiment described above, in the second state S12, the first resistance value R1 of the resistor Rpd through which the terminal VP is pulled down to the terminal VSS is less than the second resistance value R2 of the resistor Rpd through which the terminal VP is pulled down to the terminal VSS in the third state S13. In the second state S12, the terminal VP is pulled down to the terminal VSS through the resistor Rpd having a relatively small first resistance value R1, and thus a speed at which the potential at the terminal VP decreases in the second state S12 is less influenced by external impedance of the electronic device 300 or the like. As a result, in the second state S12, the potential at the terminal VP rapidly decreases toward the potential at the terminal VSS. Further, after reducing the potential at the terminal VP to a predetermined value, the potential at the terminal VP can be stabilized by setting the resistor Rpd to have the second resistance value R2 that is higher than the first resistance value R1.

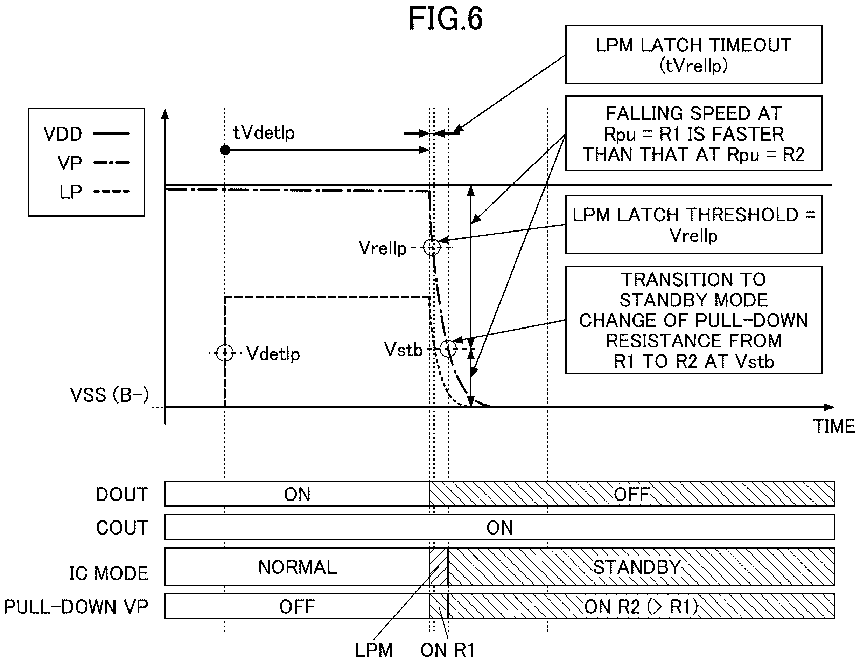

FIG. 6 is a diagram showing an example of operation waveforms of the secondary battery protection integrated circuit according to the second embodiment. The vertical axis of the graph represents the potential, and the horizontal axis represents the time. A solid line represents the potential at the terminal VDD, a dash-dot line represents the potential at the terminal VP, and a dashed line represents the potential at the terminal LP. Bars of DOUT and COUT below the graph represent signals that are respectively output from the terminals DOUT and COUT of the protection IC 102. A bar of IC MODE represents the operation mode of the protection IC. A bar of pull-down VP represents a state in which the control circuit 221 controls the resistor Rpd. In the low power mode LPM (the second state S12), the potential at the terminal VP rapidly falls toward the potential at the terminal VSS, because the terminal VP is pulled down to the terminal VSS through the resistor Rpd having a relatively small first resistance value R1. In this arrangement, the potential at the terminal VP rapidly falls below the first potential Vstb, and thus the protection IC 102 rapidly transitions from the low power mode LPM (the second state S12) to the standby mode (the third state S13). As a result, a time period of the operation that consumes more power than the standby mode is shortened, and the effect of reducing the power consumption is enhanced.

When the protection IC 102 transitions to the standby mode (the third state S13), the terminal VP is pulled down to the terminal VSS through the resistor Rpd having a second resistance value R2 that is greater than the first resistance value R1. As a result, the potential at the terminal VP falls below the first potential Vstb, and then gradually decreases toward the potential at the terminal VSS. Thus, a speed at which the potential at the terminal VP decreases toward the potential at the terminal VSS is higher when the resistor Rpd has the first resistance value R1 than when the resistor Rpd has the second resistance value R2.

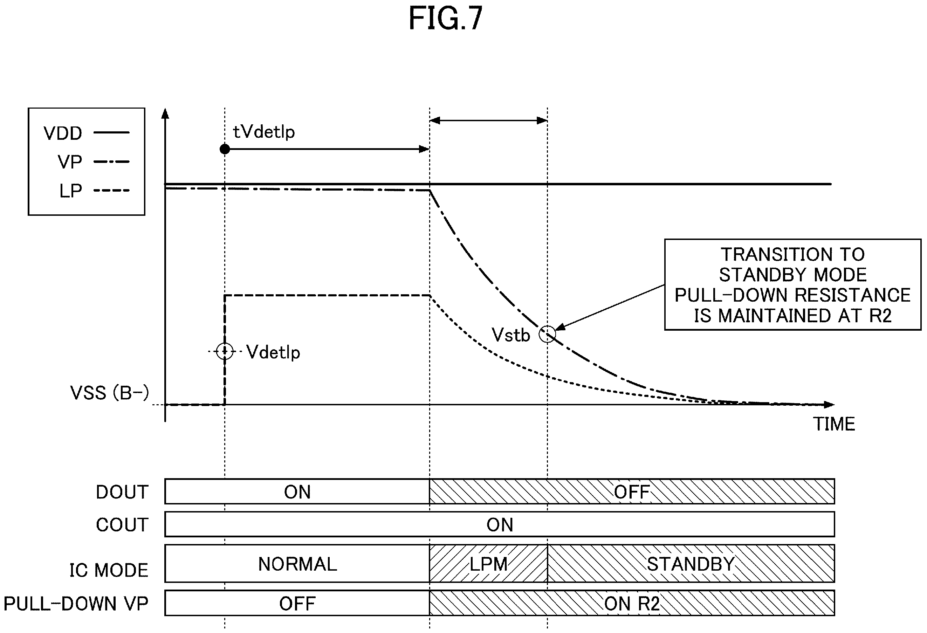

FIG. 7 is a diagram showing an example of operation waveforms of the secondary battery protection integrated circuit in a second comparative example. In the second comparative example, the resistor Rpd in the low power mode LPM is set to have the same resistance value (in this example, 1 MQ) as the resistor Rpd in the standby mode. In this case, a speed at which the potential at the terminal VP decreases after the protection IC 102 transitions to the low power mode LPM (the second state S12) is influenced by external impedance of the electronic device 300 or the like, and as shown in FIG. 7, a speed at which the potential of the terminal VP decreases is gradual immediately after the above decrease in the potential. In this arrangement, transition from the low power mode LPM (the second state S12) to the standby mode (the third state S13) may be delayed.

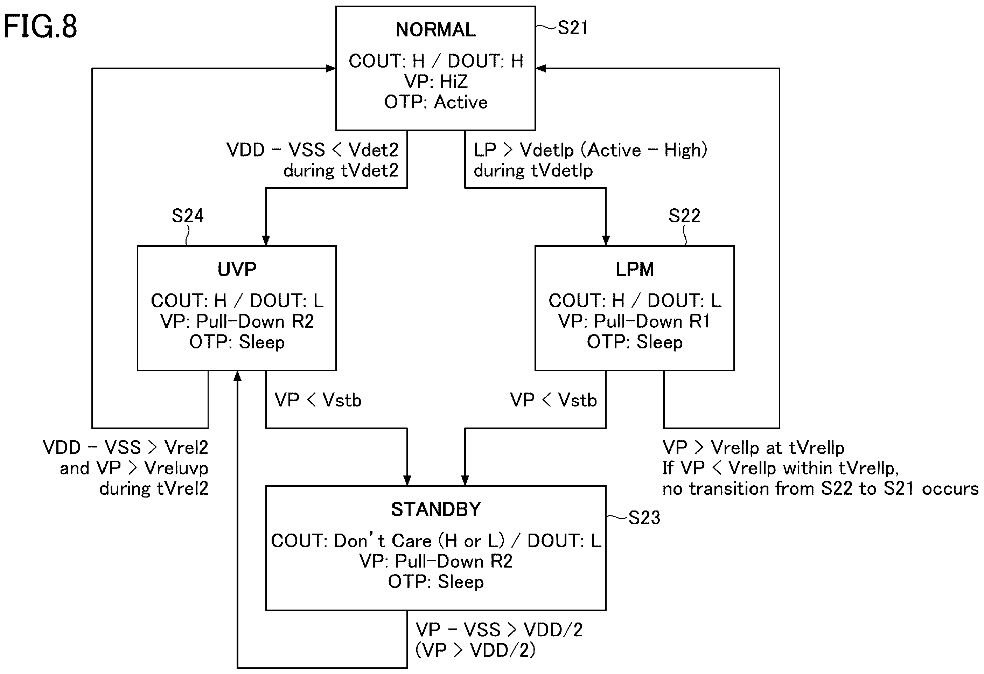

FIG. 8 is a diagram showing an example of state transitions of the secondary battery protection integrated circuit according to the second embodiment. Hereinafter, an operation example of the protection IC 102 shown in FIG. 5 will be described with reference to FIGS. 5 and 6. In each state, a state of the protection IC; outputs of the terminals COUT and DOUT; a state of the resistor Rpd connected to the terminal VP; and an operation state of OTP (Over Temperature Protection), are shown from the top.

In normal operation mode (a first state S21) of FIG. 8, the control circuit 221 outputs a signal (e.g., a high level "H" signal) to permit the charging of the secondary battery 210 from the terminal COUT, and outputs a signal (e.g., a high level "H" signal) to permit the discharging of the secondary battery 210 from the terminal DOUT. In the first state S21, the control circuit 221 turns off the switch 11, and thus high impedance (HiZ) occurs between the terminal VP and the terminal VSS.

When the signal S is active high, for example, when the potential at the terminal LP is higher than a predetermined detection threshold Vdetlp, the signal detection circuit 21 outputs, to the control circuit 221, a signal detection signal indicating that an input signal S from the terminal LP is detected. Alternatively, when the signal S is active low, for example, when the potential at the terminal LP is less than the predetermined detection threshold Vdetlp, the signal detection circuit 21 outputs, to the control circuit 221, a signal detection signal indicating that the input signal S from the terminal LP is detected.

When the signal detection signal is continuously detected for a predetermined delay time period tVdetlp (see FIG. 6), the control circuit 221 causes the protection IC 102 to transition from the normal operation mode (the first state S21) to the low power mode LPM (the second state S22).

When the protection IC 102 transitions to the low power mode LPM (the second state S22) of FIG. 8, the control circuit 221 outputs a signal (e.g., a high level "H" signal) to permit the charging of the secondary battery 210 from the terminal COUT, and outputs a signal (e.g., a low level "L" signal) to stop the discharging of the secondary battery 210 from the terminal DOUT. In the second state S22, the control circuit 221 turns on the switch 11 so that the terminal VP is pulled down to the terminal VSS through the resistor Rpd having the first resistance value R1 (for example, 25 kQ). By setting, to sleep mode, an internal circuit (such as an OTP (Over Temperature Protection) circuit) that does not need to operate in the second state S22, the control circuit 221 may reduce the power consumption of the protection IC 102 itself.

In the second state S22, when the potential at the terminal VP does not fall, within a predetermined time period tVrellp, below the second potential Vrellp (for example, VDD - 0.7 [V]) that is higher than the first potential Vstb and less than the power supply potential, the control circuit 221 causes the protection IC 102 to transition from the second state S22 to the first state S21. In the second state S22, in order to rapidly reduce the potential at the terminal VP toward the potential at the terminal VSS, the terminal VP is pulled down to the terminal VSS through the resistor Rpd having a relatively small first resistance value R1 (for example, 25 kQ). However, due to any reason, when a speed at which the potential at the terminal VP decreases becomes gently, and the potential at the terminal VP does not fall below the second potential Vrellp within a predetermined time period tVrellp, the protection IC 102 can transition back from the second state S22 to the first state S21. For example, if the potential at the terminal VM does not fall below the first potential Vstb ultimately due to the occurrence of an abnormality, the protection IC 102 remains in the second state S22 without transitioning to other states, and power supply from the secondary battery 210 to the system 502 is interrupted and the system 502 could not recover. When such an abnormality is detected, the control circuit 221 can cause the protection IC 102 to return to the first state S21. As a result, power supply from the secondary battery 210 to the system 502 is enabled, thereby allowing the system 502 to perform a recovery operation.

In the second state S22, when the potential at the terminal VP falls below the second potential Vrellp (for example, VDD - 0.7 [V]) within the predetermined time period tVrellp, the control circuit 221 does not cause the protection IC 102 to transition from the second state S22 to the first state S21. In this arrangement, after determining that there are no abnormalities, the operation mode of the IC protection IC 101 can be latched in the second state S22 to prevent returning to the first state S21 even when noise occurs.

In the second state S22, when the potential at the terminal VP becomes less than the first potential Vstb (for example, VSS + 0.9 [V]), the control circuit 221 causes the protection IC 102 to transition from the low power mode LPM (the second state S22) to the standby mode (the third state S23).

When the protection IC 102 transitions to the standby mode (the third state S23 in FIG. 8), the control circuit 221 outputs a signal (e.g., a low level "L" signal) to stop the discharging of the secondary battery 210 from the terminal DOUT. In the third state S23, the control circuit 221 sets the terminal COUT in a don't care state (either H or L signal may be output). In the third state S23, the control circuit 221 causes the terminal VP to be pulled down to the terminal VSS through the resistor Rpd having the second resistance value R2 (in this example, 1 MΩ). By setting, to sleep mode, an internal circuit (such as an OTP (Over Temperature Protection) circuit) that does not need to operate in the second state S22, the control circuit 221 may reduce the power consumption of the protection IC 102 itself.

On the other hand, in the normal operation mode (the first state S21) of FIG. 8, the control circuit 221 causes the protection IC 102 to transition from the normal operation mode (the first state S21) to over-discharge protection mode UVP (the fourth state S24), when the detection circuit 222 continuously detects over-discharging of the secondary battery 210 for a predetermined detection delay time period tVdet2. The detection circuit 222 detects the over-discharging of the secondary battery 210, when the power supply voltage Vdd between the terminal VDD and the terminal VSS is less than the over-discharge detection voltage Vdet2.

When the protection IC 102 transitions to the over-discharge protection mode UVP (the fourth state S24), the control circuit 221 outputs a signal (e.g., a high level "H" signal) to permit the charging of the secondary battery 210 from the terminal COUT, and outputs a signal (e.g., a low level "L" signal) to stop the discharging of the secondary battery 210 from the terminal DOUT. In the fourth state S24, the control circuit 221 turns on the switch 11 to thereby pull down the terminal VP to the terminal VSS through the resistor Rpd having the second resistance value R2 (in this example, 1 MΩ). By setting, to the sleep mode, an internal circuit (such as an OTP (Over Temperature Protection) circuit) that does not need to operate in the fourth state S24, the control circuit 221 may reduce the power consumption of the protection IC 102 itself.

In the fourth state S24, when the potential at the terminal VP becomes less than the first potential Vstb (for example, VSS + 0.9 [V]), the control circuit 221 causes the protection IC 102 to transition from the over-discharge protection mode UVP (the fourth state S24) to the standby mode (the third state S23). The first potential Vstb, which is a transition threshold used to transition from the over-discharge protection mode UVP (the fourth state S24) to the standby mode (the third state S23), is the same as the first potential Vstb that is a transition threshold used to transition from the low power mode LPM (the second state S12) to the standby mode (the third state S13). When the transition threshold used for mode transition is identical for two transition routes, a mode transition determination circuit can be shared between both transition routes. As a result, a circuit area can be reduced.

In the third state S23, when the potential at the terminal VP rises above the third potential (for example, VDD/2) that is higher than the potential at the terminal VSS, the control circuit 221 determines that the charger 301 is connected, and thus the protection IC 102 transitions from the third state S23 to the fourth state S24.

In the fourth state S24, the control circuit 221 determines whether the following condition is satisfied within the predetermined time period tVrel2: the power supply voltage Vdd is higher than the predetermined recovery voltage Vrel2, and the potential at the terminal VP is equal to or higher than the fourth potential Vreluvp (for example, VDD - 0.7 [V]). If the above condition is satisfied, the control circuit 221 determines that charging by a properly connected charger 301 has started, and causes the protection IC 102 to transition to the first state S21 without transitioning from the fourth state S24 to the second state S22. In this arrangement, when the protection IC 102 returns to the normal operation mode from the over-discharge protection mode, the protection IC 102 can rapidly transition to the normal operation mode, bypassing the low power mode LPM. In addition, the fourth potential Vreluvp and the second potential Vrellp can be set to the same level. As a result, since a judgment potential can be shared, and thus the circuit area can be reduced.

In the second embodiment, when the signal detection circuit 21 detects the input signal S in the first state S21, the control circuit 221 sets the second state S22 in which the terminal VP is pulled down to the terminal VSS through the resistor Rpd having the first resistance value R1. However, in a first modification of the second embodiment, when the detection circuit 222 detects that the power supply voltage Vdd is less than the over-discharge detection voltage Vdet2 in the first state S21, the control circuit 221 may set the fourth state S24 in which the terminal VP is pulled down to the terminal VSS through the resistor Rpd having the first resistance value R1.

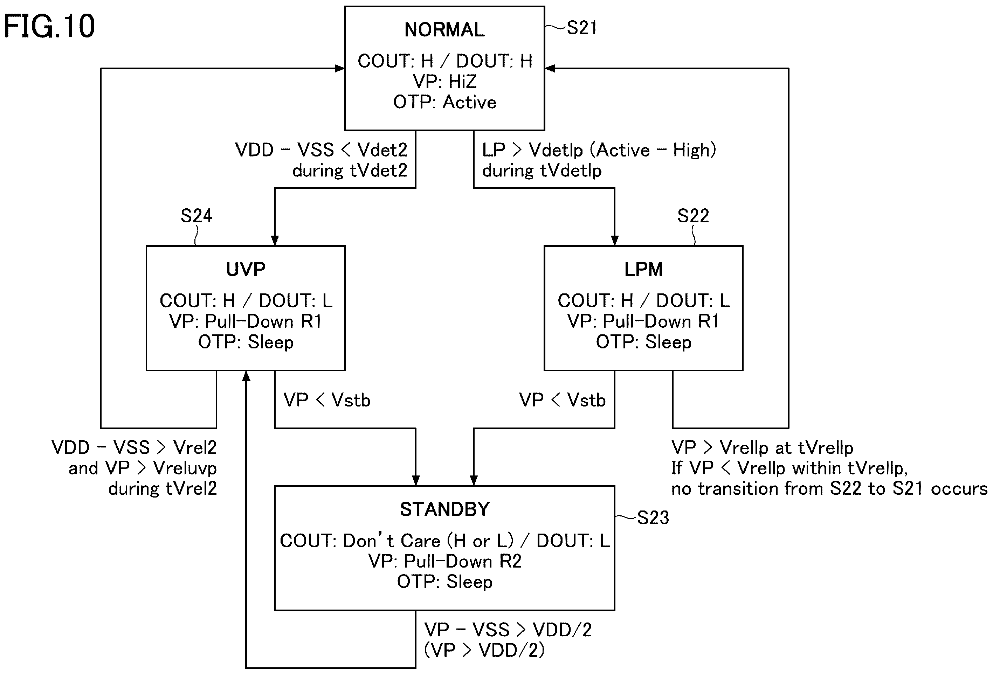

FIG. 10 is a diagram showing an example of state transitions of the secondary battery protection integrated circuit in a first modification of the second embodiment. The first modification of the second embodiment differs from the second embodiment in that the resistor Rpd has the first resistance value R1 in the fourth state S24 of FIG. 8. In the fourth state S24 of FIG. 10, the control circuit 221 causes the terminal VP to be pulled down to the terminal VSS through the resistor Rpd having the first resistance value R1 (for example, 25 kQ). In the over-discharge protection mode (the fourth state S24), the terminal VP is pulled down to the terminal VSS through the resistor Rpd having a relatively small first resistance value R1 (for example, 25 kQ), and thus the potential at the terminal VP rapidly falls toward the potential at the terminal VSS. In this arrangement, the potential at the terminal VP rapidly falls below the first potential Vstb (in this example, VSS + 0.9 [V]), so that the protection IC 102 rapidly transitions from the over-discharge protection mode (the fourth state S24) to the standby mode (the third state S23). As a result, a time period of the operation that consumes more power than the standby mode is shortened, and the effect of reducing the power consumption is enhanced.

Other configurations in the first modification of the second embodiment are the same as those of the second embodiment, and these configurations are omitted by referring to the description of the second embodiment described above.

Although the embodiments have been described above, the above embodiments are presented by way of examples, and the present disclosure is not limited to the above embodiments. The above embodiments may be embodied in various other forms, and various combinations, omissions, substitutions, modifications, or the like may be made without departing from the gist of the disclosure. These embodiments, their modifications, and equivalents are intended to cover the scope and gist of the disclosure.

For example, the positions of the charge control transistor TR1 and the discharge control transistor TR2 may be replaced with each other with respect to the positions shown in the drawings. The switch circuit 203 may be incorporated into the protection IC.

In the present disclosure, the protection IC can rapidly transition to a state that reduces power consumption, when a predetermined condition is satisfied.

According to a first example of the present disclosure, there is provided a secondary battery protection integrated circuit comprising:
a power supply terminal;
a ground terminal;
a monitor terminal;
an input terminal;
a resistor disposed between the monitor terminal and the power supply terminal; and
a control circuit configured to
   set the secondary battery protection integrated circuit to a first state in which the resistor is disconnected from the power supply terminal or the monitor terminal,
   set the secondary battery protection integrated circuit to a second state in which the monitor terminal is coupled to the power supply terminal through the resistor, when a signal is applied to the input terminal in the first state, the resistor having a first resistance value, and
   set the secondary battery protection integrated circuit to a third state in which (i) the monitor terminal is coupled to the power supply terminal through the resistor that is set to have a second resistance value, the second resistance value being greater than the first resistance value, and (ii) power consumption of the secondary battery protection integrated circuit is less than that in the first state, when a potential at the monitor terminal becomes higher than a threshold that is less than a potential at the power supply terminal in the second state.

According to a second example of the present disclosure, the secondary battery protection integrated circuit as defined according to the first example, further comprising:
a detection circuit configured to detect overcharging, a charging overcurrent, over-discharging, or a discharging overcurrent of a secondary battery,
wherein the third state is a state in which power supply to the detection circuit is interrupted.

According to a third example of the present disclosure, the secondary battery protection integrated circuit as defined according to the first example, wherein the control circuit is configured to cause the secondary battery protection integrated circuit to transition from the second state to the first state, when the potential at the monitor terminal does not exceed a second threshold within a predetermined time period in the second state, the second threshold being less than the threshold.

According to a fourth example of the present disclosure, there is provided the secondary battery protection integrated circuit as defined according to the third example, wherein the control circuit is configured to control a state of the secondary battery protection integrated circuit not to transition from the second state to the first state, when the potential at the monitor terminal exceeds the second threshold within the predetermined time period in the second state.

According to a fifth example of the present disclosure, there is provided the secondary battery protection integrated circuit as defined in any one of the first to fourth examples, wherein a speed at which the potential at the monitor terminal increases is faster when the resistor has the first resistance value than when the resistor has the second resistance value.

According to a sixth example of the present disclosure, the secondary battery protection integrated circuit as defined in any one of the first to fourth examples, further comprises:
a control terminal,
wherein the control circuit is configured to set the secondary battery protection integrated circuit to a fourth state in which a signal to stop discharging of a secondary battery is output through the control terminal, when a power supply voltage between the power supply terminal and the ground terminal is less than a predetermined detection voltage in the first state.

According to a seventh example of the present disclosure, there is provided the secondary battery protection integrated circuit as defined according to the sixth example, wherein in the fourth state, the control circuit is configured to couple the monitor terminal to the power supply terminal through the resistor having the second resistance value.

According to an eighth example of the present disclosure, there is provided the secondary battery protection integrated circuit as defined according to the seventh example, wherein the control circuit is configured to cause the secondary battery protection integrated circuit to transition from the fourth state to the third state, when the potential at the monitor terminal becomes higher than the threshold in the fourth state.

According to a ninth example of the present disclosure, there is provided the secondary battery protection integrated circuit as defined according to the sixth example, wherein the control circuit is configured to
cause the secondary battery protection integrated circuit to transition from the third state to the fourth state, when the potential at the monitor terminal becomes less than a second threshold that is less than the potential at the power supply terminal in the third state, and
cause the secondary battery protection integrated circuit to transition from the fourth state to the first state without transitioning to the second state, when (i) the power supply voltage is higher than a recovery voltage, and (ii) the potential at the monitor terminal is equal to or less than a fourth threshold that is less than the threshold in the fourth state.

According to a tenth example of the present disclosure, there is provided a secondary battery protection integrated circuit comprising:
a power supply terminal;
a ground terminal;
a monitor terminal;
an input terminal;
a resistor disposed between the monitor terminal and the ground terminal;
a control circuit configured to
   set the secondary battery protection integrated circuit to a first state in which the resistor is disconnected from the ground terminal or the monitor terminal,
   set the secondary battery protection integrated circuit to a second state in which the monitor terminal is coupled to the power supply terminal through the resistor, when a signal is applied to the input terminal in the first state, the resistor having a first resistance value, and
   set the secondary battery protection integrated circuit to a third state in which (i) the monitor terminal is coupled to the power supply terminal through the resistor that is set to have a second resistance value, the second resistance value being greater than the first resistance value, and (ii) power consumption of the secondary battery protection integrated circuit is less than that in the first state, when a potential at the monitor terminal becomes less than a threshold that is higher than a potential at the ground terminal in the second state.

According to an eleventh example of the present disclosure, the secondary battery protection integrated circuit as defined according to the tenth example, further comprising:
a detection circuit configured to detect overcharging, a charging overcurrent, over-discharging, or a discharging overcurrent of a secondary battery,
wherein the third state is a state in which power supply to the detection circuit is interrupted.

According to a twelfth example of the present disclosure, there is provided the secondary battery protection integrated circuit as defined according to the tenth example, wherein the control circuit is configured to cause the secondary battery protection integrated circuit to transition from the second state to the first state, when the potential at the monitor terminal does not fall below a second threshold within a predetermined time period in the second state, the second threshold being higher than the threshold.

According to a thirteenth example of the present disclosure, there is provided the secondary battery protection integrated circuit as defined according to the twelfth example, wherein the control circuit is configured to control a state of the secondary battery protection integrated circuit not to transition from the second state to the first state, when the potential at the monitor terminal falls below the second threshold within the predetermined time period in the second state.

According to a fourteenth example of the present disclosure, there is provided the secondary battery protection integrated circuit as defined according to any one of the tenth to thirteenth examples, wherein a speed at which the potential at the monitor terminal decreases is faster when the resistor has the first resistance value than when the resistor has the second resistance value.

According to a fifteenth example of the present disclosure, the secondary battery protection integrated circuit as defined according to any one of the tenth to thirteenth examples, further comprising:
a control terminal,
wherein the control circuit is configured to set the secondary battery protection integrated circuit to a fourth state in which a signal to stop discharging of a secondary battery is output through the control terminal, when a power supply voltage between the power supply terminal and the ground terminal is less than a predetermined detection voltage in the first state.

According to a sixteenth example of the present disclosure, there is provided the secondary battery protection integrated circuit as defined according to the fifteenth example, wherein in the fourth state, the control circuit is configured to couple the monitor terminal to the ground terminal through the resistor having the second resistance value.

According to a seventeenth example of the present disclosure, there is provided the secondary battery protection integrated circuit as defined according to the sixteenth example, wherein the control circuit is configured to cause the secondary battery protection integrated circuit to transition from the fourth state to the third state, when the potential at the monitor terminal becomes less than the threshold in the fourth state.

According to an eighteenth example of the present disclosure, there is provided the secondary battery protection integrated circuit as defined according to the fifteenth example, wherein the control circuit is configured to
cause the secondary battery protection integrated circuit to transition from the third state to the fourth state, when the potential at the monitor terminal becomes higher than a second threshold that is higher than the potential at the ground terminal in the third state, and
cause the secondary battery protection integrated circuit to transition from the fourth state to the first state without transitioning to the second state, when (i) the power supply voltage is higher than a recovery voltage, and (ii) the potential at the monitor terminal is equal to or less than a fourth threshold that is less than the threshold in the fourth state.

According to a nineteenth example of the present disclosure, there is provided a secondary battery protection integrated circuit comprising:
a power supply terminal;
a ground terminal;
a monitor terminal;
an input terminal;
a control terminal;
a resistor disposed between the monitor terminal and the power supply terminal; and
a control circuit configured to
   set the secondary battery protection integrated circuit to a first state in which the resistor is disconnected from the power supply terminal or the monitor terminal,
   set the secondary battery protection integrated circuit to a second state in which (i) the monitor terminal is coupled to the power supply terminal through the resistor, the resistor having a first resistance value, and (ii) a signal to stop discharging of a secondary battery is output through the control terminal, when a power supply voltage between the power supply terminal and the ground terminal is less than a predetermined detection voltage in the first state, and
set the secondary battery protection integrated circuit to a third state in which (i) the monitor terminal is coupled to the power supply terminal through the resistor that is set to have a second resistance value, the second resistance value being greater than the first resistance value, and (ii) power consumption of the secondary battery protection integrated circuit is less than that in the first state, when a potential at the monitor terminal becomes higher than a threshold that is less than a potential at the power supply terminal in the second state.

According to a twentieth example of the present disclosure, the secondary battery protection integrated circuit as defined according to the nineteenth example, further comprising:
a detection circuit configured to detect overcharging, a charging overcurrent, over-discharging, or a discharging overcurrent of a secondary battery,
wherein the third state is a state in which power supply to the detection circuit is interrupted.

According to a twenty-first example of the present disclosure, there is provided the secondary battery protection integrated circuit as defined according to the nineteenth or twentieth example, wherein a speed at which the potential at the monitor terminal increases is faster when the resistor has the first resistance value than when the resistor has the second resistance value.

According to a twenty-second example of the present disclosure, there is provided a secondary battery protection integrated circuit comprising:
a power supply terminal;
a ground terminal;
a monitor terminal;
an input terminal;
a control terminal:
   a resistor disposed between the monitor terminal and the ground terminal; and
   a control circuit configured to
      set the secondary battery protection integrated circuit to a first state in which the resistor is disconnected from the ground terminal or the monitor terminal,
      set the secondary battery protection integrated circuit to a second state in which (i) the monitor terminal is coupled to the power supply terminal through the resistor, the resistor having a first resistance value, and (ii) a signal to stop discharging of a secondary battery is output through the control terminal, when a power supply voltage between the power supply terminal and the ground terminal is less than a predetermined detection voltage in the first state, and
      set the secondary battery protection integrated circuit to a third state in which (i) the monitor terminal is coupled to the power supply terminal through the resistor that is set to have a second resistance value, the second resistance value being greater than the first resistance value, and (ii) power consumption of the secondary battery protection integrated circuit is less than that in the first state, when a potential at the monitor terminal becomes less than a threshold that is higher than a potential at the ground terminal in the second state.

According to a twenty-third example of the present disclosure, the secondary battery protection integrated circuit as defined according to the twenty-second example, further comprising:
a detection circuit configured to detect overcharging, a charging overcurrent, over-discharging, or a discharging overcurrent of a secondary battery,
wherein the third state is a state in which power supply to the detection circuit is interrupted.

According to a twenty-fourth example of the present disclosure, there is provided the secondary battery protection integrated circuit as defined according to the twenty-second or twenty-third example, wherein a rate at which the potential at the monitor terminal decreases is faster when the resistor has the first resistance value than when the resistor has the second resistance value.

According to a twenty-fifth example of the present disclosure, there is provided a secondary battery protection device comprising:
the secondary battery protection integrated circuit of any one of the first, tenth, nineteenth and the twenty-second examples; and
a switch disposed in a current path that is coupled to a secondary battery,
wherein the switch is configured to be controlled to protect the secondary battery.

According to a twenty-sixth example of the present disclosure, there is provided a battery device comprising:
the secondary battery protection integrated circuit of any one of the first, tenth, nineteenth and the twenty-second examples;
a secondary battery; and
a switch disposed in a current path that is coupled to the secondary battery,
wherein the switch is configured to be controlled to protect the secondary battery.

## Claims

1. A secondary battery protection integrated circuit comprising:
a power supply terminal;
a ground terminal;
a monitor terminal;
an input terminal;
a resistor disposed between the monitor terminal and the power supply terminal; and
a control circuit configured to
set the secondary battery protection integrated circuit to a first state in which the resistor is disconnected from the power supply terminal or the monitor terminal,
set the secondary battery protection integrated circuit to a second state in which the monitor terminal is coupled to the power supply terminal through the resistor, when a signal is applied to the input terminal in the first state, the resistor having a first resistance value, and
set the secondary battery protection integrated circuit to a third state in which (i) the monitor terminal is coupled to the power supply terminal through the resistor that is set to have a second resistance value, the second resistance value being greater than the first resistance value, and (ii) power consumption of the secondary battery protection integrated circuit is less than that in the first state, when a potential at the monitor terminal becomes higher than a threshold that is less than a potential at the power supply terminal in the second state.

2. The secondary battery protection integrated circuit as claimed in claim 1, further comprising:
a detection circuit configured to detect overcharging, a charging overcurrent, over-discharging, or a discharging overcurrent of a secondary battery,
wherein the third state is a state in which power supply to the detection circuit is interrupted.

3. The secondary battery protection integrated circuit as claimed in claim 1, wherein the control circuit is configured to cause the secondary battery protection integrated circuit to transition from the second state to the first state, when the potential at the monitor terminal does not exceed a second threshold within a predetermined time period in the second state, the second threshold being less than the threshold.

4. The secondary battery protection integrated circuit as claimed in claim 3, wherein the control circuit is configured to control a state of the secondary battery protection integrated circuit not to transition from the second state to the first state, when the potential at the monitor terminal exceeds the second threshold within the predetermined time period in the second state.

5. The secondary battery protection integrated circuit as claimed in any one of claims 1 to 4, wherein a speed at which the potential at the monitor terminal increases is faster when the resistor has the first resistance value than when the resistor has the second resistance value.

6. The secondary battery protection integrated circuit as claimed in any one of claims 1 to 4, further comprises:
a control terminal,
wherein the control circuit is configured to set the secondary battery protection integrated circuit to a fourth state in which a signal to stop discharging of a secondary battery is output through the control terminal, when a power supply voltage between the power supply terminal and the ground terminal is less than a predetermined detection voltage in the first state.

7. The secondary battery protection integrated circuit as claimed in claim 6, wherein in the fourth state, the control circuit is configured to couple the monitor terminal to the power supply terminal through the resistor having the second resistance value.

8. The secondary battery protection integrated circuit as claimed in claim 7, wherein the control circuit is configured to cause the secondary battery protection integrated circuit to transition from the fourth state to the third state, when the potential at the monitor terminal becomes higher than the threshold in the fourth state.

9. The secondary battery protection integrated circuit as claimed in claim 6, wherein the control circuit is configured to
cause the secondary battery protection integrated circuit to transition from the third state to the fourth state, when the potential at the monitor terminal becomes less than a second threshold that is less than the potential at the power supply terminal in the third state, and
cause the secondary battery protection integrated circuit to transition from the fourth state to the first state without transitioning to the second state, when (i) the power supply voltage is higher than a recovery voltage, and (ii) the potential at the monitor terminal is equal to or less than a fourth threshold that is less than the threshold in the fourth state.
